# EUROPEAN PATENT SPECIFICATION

(11) **EP 1 968 263 B1**
(45) Date of publication and mention of the grant of the patent: **04.06.2014**
(21) Application number: 06828289.6
(22) Date of filing: 11.12.2006
(51) Int. Cl.: H04L 29/08, G06F 17/30, H04L 12/58

(54) **A METHOD AND SYSTEM FOR QUERYING USER INFORMATION, AND SEARCH AGENT, CLIENT AND SERVER**
VERFAHREN UND SYSTEM ZUR ABFRAGE VON BENUTZERDATEN, SUCHAGENT, CLIENT UND SERVER
PROCEDE ET SYSTEME DE DEMANDE D'INFORMATIONS D'UTILISATEUR, AGENT DE RECHERCHE, CLIENT ET SERVEUR

(30) Priority: 17.12.2005 CN 200510120925
(43) Date of publication of application: 10.09.2008
(73) Proprietor: Huawei Technologies Co., Ltd., Longgang District, Shenzhen Guangdong 518129 (CN)
(72) Inventor: SUN, Qian, Guangdong 518129 (CN); SONG, Xuefei, Guangdong 518129 (CN); TIAN, Linyi, Guangdong 518129 (CN); ZHAO, Yang, Guangdong 518129 (CN); BAO, Hongqing, Guangdong 518129 (CN)
(74) Representative: Körber, Martin Hans
(86) International application number: PCT/CN2006/003366
(87) International publication number: WO 2007/068195

(56) References cited:
- CN-A- 1 573 752
- US-A1- 2003 182 277
- US-A1- 2005 234 885
- WEI, WU; LUEDE, THOMAS; IZAGUIRRE, ENRIQUE; ZHAO, YANG: "Use case Search by Presence Information"[Online] 25 November 2005 (2005-11-25), XP002541728 OMA-PAG Retrieved from the Internet: URL:http://member.openmobilealliance.org/f tp/Public_documents/PAG/2005/OMA-PAG-2005- 0603-CR-Use-Case-Search-by-Presence-Inform ation.zip> [retrieved on 2009-08-17]
- LAURILA, ANTTI: "XDM Search Architecture"[Online] 11 October 2005 (2005-10-11), XP002541729 OMA-PAG Retrieved from the Internet: URL:http://member.openmobilealliance.org/f tp/Public_documents/PAG/2005/OMA-PAG-2005- 0540-XDM-Search-Architecture.zip> [retrieved on 2009-08-17]
- "XML Document Management Requirements"[Online] 17 March 2005 (2005-03-17), XP002510124 OMA-PAG Retrieved from the Internet: URL:http://www.openmobilealliance.org/Tech nical/release_program/docs/XDM/ V1_0-20050628-C/OMA-RD-XDM-V1_0-20050317-C .pdf> [retrieved on 2009-01-13]
- "XML Document Management Architecture"[Online] 19 October 2005 (2005-10-19), XP002541730 OMA-PAG Retrieved from the Internet: URL:http://member.openmobilealliance.org/f tp/Public_documents/PAG/Permanent_document s/OMA-AD-XDM-V2_0-20051019-D.zip> [retrieved on 2009-08-17]
- "XML Document Management (XDM) Specification"[Online] 22 November 2005 (2005-11-22), XP002421985 OMA-PAG Retrieved from the Internet: URL:http://www.openmobilealliance.org/rele ase_program/docs/XDM/V1_0-20051 122-C/OMA-TS-XDM_Core-V1_0-20051122-C.pdf> [retrieved on 2007-03-29]
- LAURILA, ANTTI: "Architecture of XDM Search"[Online] 5 August 2005 (2005-08-05), XP002541731 OMA-PAG Retrieved from the Internet: URL:http://member.openmobilealliance.org/f tp/Public_documents/PAG/2005/OMA-PAG-2005- 0419-Architecture-of-XDM-Search.zip> [retrieved on 2009-08-17]
- LAURILA, ANTTI: "XDM Search Architecture"[Online] 14 June 2005 (2005-06-14), XP002541732 OMA-PAG Retrieved from the Internet: URL:http://member.openmobilealliance.org/f tp/Public_documents/PAG/2005/OMA-PAG-2005- 0373-XDM-Search-architecture.zip> [retrieved on 2009-08-17]
- LAURILA, ANTTI: "XDM Search Architecture and Protocol"[Online] 18 October 2005 (2005-10-18), XP002541733 OMA-PAG Retrieved from the Internet: URL:http://member.openmobilealliance.org/f tp/Public_documents/PAG/2005/OMA-PAG-2005- 0552-XDM-Search-Architecture-and-Protocol. zip> [retrieved on 2009-08-17]

## Description

### FIELD OF THE TECHNOLOGY

The present invention relates to a communication field. More particularly, the present invention relates to a method and a system for querying user information and a search proxy, a client, and an Extensible Markup Language Document Management (XDM) server.

### BACKGROUND OF THE INVENTION

Currently, in a communication system, different service engines, such as Presence, Push-to-Talk over Cellular (PoC), and instant messaging (IM), need to access and perform operations on some shared information or independently required information, including Uniform Resource Identifier (URI) lists, groups, access control policies, and authorization policies. Such information uses the Extensible Markup Language (XML), and is stored in the XDM server, and the service engines use the XML Configuration Access Protocol (XCAP) to access and perform operations on the XML data.

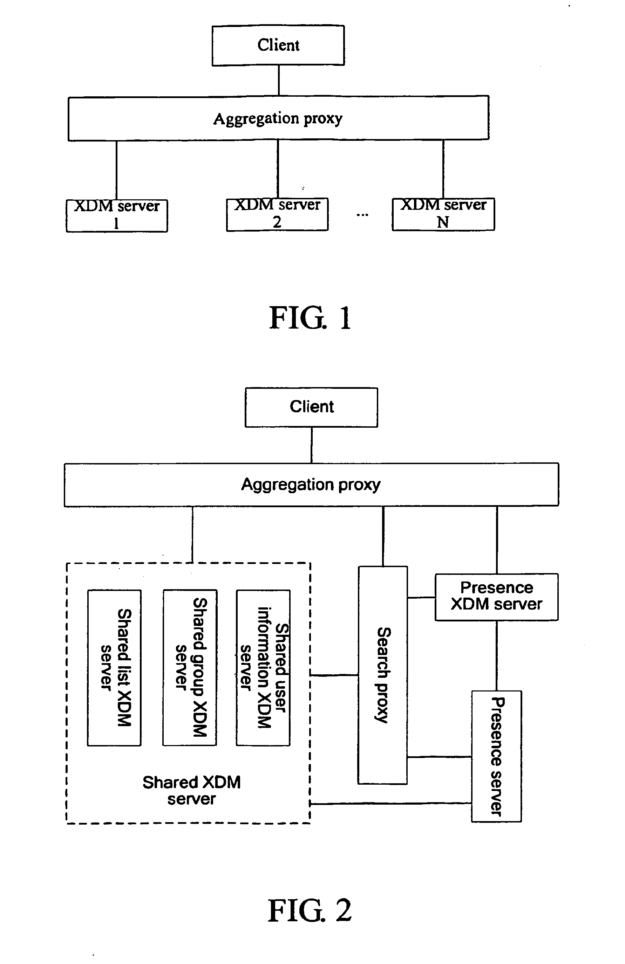

Normally, a service engine has its own XDM server for storing and managing the dedicated XML data. In addition, a shared XDM server can also be set up to store and manage the XML data used by all service engines. Normally, the information stored in the XDM server is relatively static, yet the information stored in the service engine servers is dynamic. For example, the XDM server stores the configuration data of users, the group information, and the user information, and the presence server stores the presence information. The service engine servers can directly access the information stored in the XDM server. Besides, the client can access and perform operations on the XML data through the XCAP by using an aggregation proxy FIG. 1 is a schematic view of a networking in which the client accesses the XDM server through the aggregation proxy. The aggregation proxy is the connecting point through which the XDM client on a user device accesses the XML documents on the XDM server. Main functions of the aggregation proxy include authenticating the XDM client and routing the XCAP requests to the related XDM server. For the detailed principles of the aggregation proxy, refer to the XDM V1.0 specifications released by the Open Mobile Alliance (OMA) and the XCAP documents released by the Internet Engineering Task Force (IETF).

In the networking as shown in FIG. 1, the client can create, delete, modify, and get the XML documents. The HTTP GET operations for getting an XML document by the client are described as follows.

1. The XDM client sends an XCAP request message for getting the XML document. The content of the message includes the name of the XCAP operation, that is, GET, the XCAP Application Unique ID (AUID), such as resource-lists, and the name of the document to get, such as fr.xml. Specifically, the message may be:
GET /services/resource-lists/users/bill/fr.xml HTTP/1.1

2. After receiving the XCAP request message, the aggregation proxy authenticates a user. If the authentication succeeds, the aggregation proxy routes the request message to a corresponding XDM server;

3. After receiving the request message, the XDM server searches for the corresponding XML document, and returns the XML document to the client. The content of the returned message may be:

```
       HTTP/1.1 200 OK
       Etag: "hhwwe"
       Content-Type: application/resource-lists+xml
       <?xml version="1.0" encoding="LTTF-8"?>
       <resource-lists xmlns="urn:ietf:params:xml:ns:resource-lists">
     <list name="friends">
          <entry uri="sip:sunqian@huawei.com">
           <display-name>Sun Qian</display-name>
          </entry>
        </list>
       </resource-lists>
```

The information about the above returned content is that the list name is a member in the friends group, the URI is sip:sunqian@huawei.com, and the display-name is Sun Qian.

However, in actual applications, a user often expects to obtain the information about other users by specifying some limitations, for example, to query the information about other members in the group containing the user URI. The information includes static user information such as ages, genders, and contacts of the users, and dynamic presence information such as the online or offline state, location, and emotional information. The information may be presence in different XML documents, or even on different the XDM server and presence servers. Therefore, the previous expectations cannot be accomplished through the simple HTTP GET process. In addition, currently, the presence server cannot use the HTTP method to provide the presence information to the client; instead, the function can be realized through only the subscription/notification method.

One Internet public document "Use case search by presence information" is publiced on December 01, 2005, numbered XP-002541728 OMA-PAG, and retrieved from the Internet: URL:http://member.openmobilealliance.org/ftp/Public_documents/ PAG/2005/OMA-PAG-2005-0603-CR-Use-Case-Search-by-Presence-Information.zip>. This document discloses some new searching request and its use cases. Wherein the use case describes how a user can search for a list of subscribers by additionally using presence information, such as IM-online and game-online information. Based on the search result filtered with presence information, the end-user can do further operation, e.g. adding the user(s) to his/her contact list or Buddy List, chatting or playing game with the user he chooses, and retrieving the user(s)'s profile. Due to the presence information filtering the result is more convenient for the user since he directly knows if the potential contact is matching his presence filter criteria.

Another Internet public document "XDM Search Architecture" is publiced on October 11, 2005, numberd XP-002541729 OMA-PAG, and retrieved from the Internet: URL:http://member.openmobilealliance.org/ftp/Public_documentments/PAG/ 2005/OMA-PAG-2005-0540-XDM-Search-Architecture.zip>. This document discloses three different architecture options for XDM search functionality, which are centralized architecture, distributed architecture and combined architecture respectively.

Another Internet public document "XML Document Management Requirements" is publiced on March 17, 2005, numbered XP-002510124 OMA-PAG, and retrieved from the Internet: URL: http://www.openmobilealliance.org/Technical/ release_program/docs/XDM/V1_0-20050628-C/OMA-RD-XDM-V1_0-20050317-C.pdf>. This document discloses use cases and requirements for the management of information (e.g. URL lists) that are stored as documents using an extensible and platform-neutral format that could be used by OMA service enablers. The privacy of personal data, such as, principal identify is protected according to privacy requlations. The XDM enabler provides mechanisms for principals to speicifiy who can access the data they have stored. In addition, the owner of a XDM enabler deployment has full access to this dat a for purposes, such as, administration and maintenance. The XDM enabler is designed to support other OMA service enablers and applications.

### SUMMARY

Accordingly, in order to allow a user to obtain information and presence information about other users on the XDM servers more easily and conveniently, the present invention provides a method and system for querying user information, and a search proxy, a client, and an XDM server,

The embodiments of the present invention are realized through the following technical schemes.

In order to overcome the above mentioned deficiencies according to a first aspect of the present invention there is provided a method for querying user information, in which a search proxy is arranged, including:
receiving, by the search proxy, a query request containing query conditions sent from a client, and forwarding a message of the query request to an Extensible Markup Language Document Management (XDM) server;
receiving, by the search proxy, a query result containing a user Uniform Resource Identifier (URI) satisfying the query conditions returned from the XDM server;
subscribing, by the search proxy, to a presence information of a user from a presence server, the user being indicated by the user URI contained in the query result;
receiving, by the search proxy, the presence information returned from the presence server; and
integrating, by the search proxy, the presence information returned from the presence server with the query result returned from the XDM server and sending an integration result to a client.

According to a second aspect of the invention as an alternative of the first aspect there is provided a method for querying user information includes as follows. An XDM server in which the user information is stored subscribes to user presence information from a presence server, the presence server sends a corresponding notification to the XDM server when the presence information to which the XDM server subscribes changes and the XDM server synchronizes and updates the presence information according to the notification.

The above method for querying user information includes:
receiving, by the search proxy, a query request, in which limiting conditions contains a limiting condition on the user presence information;
forwarding, by the search proxy, the query result to the client through the aggregation proxy.

According to a third aspect of the invention as an alternative of the first or second aspect there is provided a method for querying user information, in which a search proxy, an XDM server, a presence information XDM server and a presence server are provided including:
receiving, by the search proxy, a query request containing query conditions and forwarding a message of the query request to the XDM server storing user information and the presence information XDM server storing user presence information which is synachronized from the presence server;
receiving, by the search proxy, a query result returned from the XDM server, wherein the query result including user information satisfying the query conditions, and a query result returned from the presence information XDM server wherein the query result includes a presence information satisfying the query conditions; and
integrating, by the search proxy, the user information with the presence information and sending an integration result to the client.

Further, in order to overcome the above mentioned deficiencies, according to a forth aspect of the invention and with a certain relationship to the solution of a method according to the above mentioned second aspect, a search proxy is provided. The search proxy is adapted to interact with a client, an XDM server, and a presence server.

The search proxy is adapted to interact with the client, an XDM server, and the presence server, and includes a transceiver unit and an integrating unit.

The transceiver unit is adapted to receive a query request containing query conditions sent from the client, forward a message of the query request to the XDM server storing user information or group information; receive a query result containing a user URI returned from the XDM server, send the query result to the integrating unit; subscribe to the presence information of the user URI contained in the query result from the presence server, send the received presence information returned from the presence server to the integrating unit; receive an integration result sent from the integrating unit, and send the integration result to the client; and

the integrating unit is adapted to obtain the user URI satisfying the query conditions from the received query result sent from the XDM server, integrate the user URI with the received presence information, and send the integration result to the transceiver unit.

Further, in order to overcome the above mentioned deficiencies, according to an fifth aspect of the invention and with a certain relationship to the solution of a method according to the above mentioned third aspect, a search proxy is provided. The search proxy is adapted to interact with a client, an XDM server, an presence information XDM server and a presence server. The search proxy includes a transceiver unit and an integrating unit.

The transceiver unit is adapted to receive a query request containing query conditions sent from the client, forward a message of the query request to the XDM server storing user information and the presence information XDM server storning user presence information which is synchronized from a presence server, receive a query result returned from the XDM server, wherein the query result includes a user information satisfying the query conditions, and a query result returned from the presence information XDM server wherein the query result includes a presence information satisfying the query conditions, return the query result containing user information and the presence information to the integrating unit; receive an integration result sent from the integration unit, and send the integration result to the client; and
the integrating unit is adapted to integrate the user information with the presence information satisfying the query conditions, and send the integration result to the transceiver unit.

According to technical schemes provided in the embodiments of the present invention, it is known that the present invention uses the search proxy. Thus, the client can obtain the user information in multiple XML documents on multiple servers at one time, and the corresponding presence information is obtained and returned to the client at the same time. In addition, the client is not limited to obtaining the user information in a single XML document stored in a server through the simple HTTP GET method. The present invention expands the method for obtaining the presence information, and enhances the capability of querying the user information in XML documents.

### BRIEF DESCRIPTION OF THE DRAWINGS

FIG. 1 is a schematic view of a networking in which a client accesses the XDM server through an aggregation proxy;
FIG. 2 is a schematic structural view of a communication system using a method of the exbodiments;
FIG. 3 is a flow chart of detailed processes of a method for querying user information of the exbodiments;
FIG. 4 is a schematic view of a networking of a presence server and a presence XDM server;
FIG. 5 is a schematic view of a networking of a presence information XDM server, a presence server, and a presence XDM server according to Embodiment 1;
FIG. 6 is a flow chart of message interaction corresponding to Embodiment 1;
FIG. 7 is a schematic view of a networking according to Embodiment 2; and
FIG. 8 is a schematic view of a networking according to Embodiment 3.

### DETAILED DESCRIPTION

The disclosure provides a method for querying user information. A search proxy may be arranged. The search proxy processes a query request sent from a service engine server or a client, forwards the processed query request to a corresponding XDM server, and obtains corresponding presence information. Then, the query result returned from the XDM server and the presence information are integrated, and an integration result may be returned to the service engine server or the client.

A communication system is described as follows. The structure of the communication system is shown in FIG. 2, and the system includes a client, an aggregation proxy, an XDM server, a presence server, and a search proxy.

The search proxy may be adapted to receive a query request containing query conditions sent from the client and forwarded by the aggregation proxy, and forward the query request to the XDM server storing user information or group information. The search proxy may also be adapted to receive the query result returned from the XDM server, and the query result includes a user URI satisfying the query conditions. Then, the search proxy may also be adapted to subscribe to and receive the user URI presence information from the presence server. The user URI is contained in the query result. Finally, the search proxy may also integrate the presence information returned from the presence server with the query result returned from the XDM server into an integration result, and then send the integration result to the client through the aggregation proxy.

The aggregation proxy may be adapted to receive the query result sent from the client, forward the request to the search proxy, and return the processed result sent from the search proxy to the client. The client may manage the XML documents stored in the XDM server through the aggregation proxy.

The XDM server includes a shared XDM server and a service engine XDM server, such as a presence XDM server. The XDM server stores and manages the XML documents of various service engines, and provides the information about the queried XML documents to the search proxy.

The shared XDM server may be adapted to store and manage the XML data shared by different service engines. The shared XDM server may be a shared list XDM server, a shared group XDM server, or a shared user information XDM server.

The shared list XDM server may be adapted to store the shared URI list information, including a list name and the URIs in the list. The shared group XDM server stores the shared group information, including a group identification URI, URIs of group members, a group name, a group description, and group policies. For example, the shared group XDM server may be a PoC group XDM server or an IM group XDM server. The shared user information XDM server stores the shared user information, including user identification URIs, names, ages, and genders. For the convenience of description, the user identification URIs and the URIs of the group members are all referred to as a user URI herein.

The presence server may be adapted to receive, store, and distribute the user presence informations, such as whether the users are online. The presence XDM server may be adapted to store the information such as the authorization rules of the users.

The client may be adapted to send the query request to the aggregation proxy, receive and display the processing result returned from the aggregation proxy. Moreover, the client may send a request for operating the XML documents stored in the XDM server to the aggregation proxy.

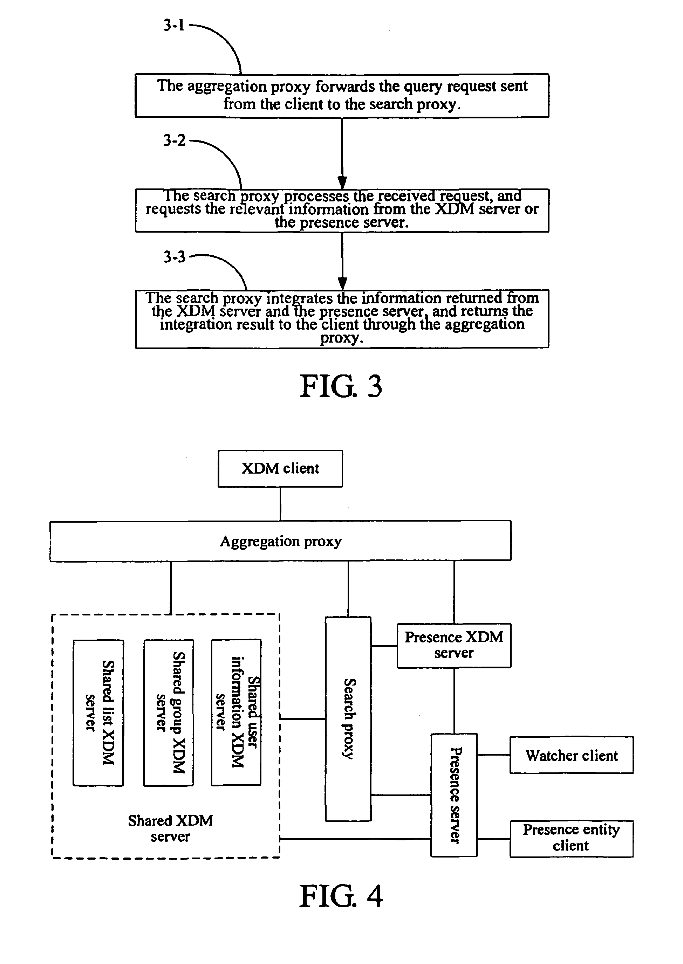

The detailed process of the method for querying user information in the communication system is as shown in FIG. 3, and includes the following steps.

In Block 3-1, the aggregation proxy forwards a query request sent from the client to the search proxy.

In the embodiment, the client may send the query request to the aggregation proxy by an HTTP POST method. An HTTP POST message body includes the AUID and query expression corresponding to the search proxy. The AUID is the unique application identifier. An XCAP AUID consistent with the processing of the current XCAP protocol, for example, "SearchRequest", may be reset for the query request. The XCAP message containing the AUID sent from the client may be forwarded by the aggregation proxy and routed to the search proxy. In the embodiment, an XCAP operation request with an AUID, such as creating or modifying XML documents on an XDM server, may be directly routed to the corresponding XDM server by the aggregation proxy for processing.

In Block 3-2, the search proxy processes the received request, and sends a request to the XDM server and the presence server to obtain the corresponding information.

The search proxy receives the query request forwarded by the aggregation proxy, and processes the request. Normally, each XML document may be corresponding to an authorization rule document, which records the rights to read, query, modify or delete the XML document, and records the operations that the users can perform. The search proxy may access the XDM server through the XCAP protocol according to the URI of the user who sends the query request, and obtain the the authorization rules about the user, i.e., obtain the information about the XML document list that the user has the right to read or query. Then, the search proxy may generate and send a corresponding query message to the corresponding XDM server. Alternatively, the XDM server may process the query request directly, authenticate the query request, and determine whether the information about the XML document list that the user has the right to read or query may be permitted to query. Then, the XDM server queries the documents in the list, and returns the obtained query result to the search proxy. However, although the interaction may be reduced, the XDM server needs to perform much authentication processing.

After receiving the query message sent from the search proxy, the XDM server retrieves the query message, and queries the corresponding information about the XML documents in the XML document list that the user has the right to read or query. If the authorization rule document of an XML document in the XML document list that the user has the right to read or query allows the user URI to perform the reading operation, it is not allowed to read or query the entire XML document, i.e., it is allowed to read or query a part of the content In this case, when the XDM server query the information, the XDM server needs to determine part of the content that the URI can obtain according to the information about the authorization rule document, and query the information within this part.

Moreover, the search proxy can obtain the required information from multiple servers for one query of the user. If a union operation is performed on the information obtained from multiple servers, the search proxy may send the query request to the multiple servers concurrently. If the query result is required to serve as the query conditions of the next query, the search proxy needs to perform the query sequentially. For example, if the client queries the information about group member users of a group containing a specific URI, the search proxy needs firstly to obtain the group containing the specified URI and the URIs of the group members in the group from the storing group information XDM server. Then the search proxy queries the information about the users with the URIs of the group members on the storing user information XDM server.

The search proxy receives the query result returned from the XDM server. The query result contains the user URI or group member user URI satisfying the query conditions. The search proxy subscribes to the user URI presence information from the presence server, the user URI is contained in the query result, and the presence server returns the presence information to the search proxy.

The presence server determines whether the search proxy is allowed to obtain the presence information subscribed to by the search proxy according to the authorization rule document corresponding to each user URI, and returns the allowed presence information to the search proxy. For instance, a search proxy URI represenceing the entity of the search proxy can be set in advance, and the presence information to which the search proxy is allowed to subscribe corresponding to the search proxy URI is set in the authorization rule document of the user on the presence XDM server. In addition, the search proxy can also subscribe to the presence information of the URIs from the presence server for the URI corresponding to the client that sends the query request. The URIs is contained in the query result. The presence server determines whether the URI corresponding to the client that sends the query request is allowed to obtain the presence information according to the authorization rule document of each user URI, and returns the allowed presence information to the search proxy. The subscription request sent from the search proxy is normally one-off subscription, that is, the expiration time may be specified as zero in the SIP subscription message. After the subscription request sent from the search proxy is received, if the presence server detects that the authorization rules of the user URI require the confirmation of the presence entity user to subscribe to the user presence information, the presence server refuses to subscribe to the user presence information for the search proxy. Thus, the query process will not have too many confirmation notifications. Moreover, if the confirmation by the presence entity user is required before the presence information is sent, the query response will be delayed.

In Block 3-3, the search proxy integrates the information returned from the XDM server and the presence server, and returns the integration result to the client through the aggregation proxy.

The detailed integrating method is described as follows.
1. The search proxy performs a set operation on the query result returned from the multiple XDM servers. The set operation can be the combination or joining of the query result, that is, a union operation on the query result. The set operation can also be an intersection operation on the query result according to conditions in the query request. For example, if a user wants to obtain the group information containing a specified member URI in the PoC or IM service, the search proxy can obtain the group information containing the specific member URI from the XDM server for the PoC service and the XDM server for the IM server, and perform the union operation on the obtained information. If the group containing the specific member URI that the user wants to obtain is involved in the both PoC service and the IM service, the intersection operation is required.
2. If the query conditions are complicated, more than two query operations may be performed. The search proxy uses the information obtained at the next time to filter the previous query result. For example, If the client queries the information about online users satisfying some limiting conditions (for example, ages, genders or cities), the search proxy first obtains the information about the users satisfying the limiting conditions from the XDM server, and then obtains the presence information about whether the users are online from the presence server. Then, the search proxy removes the offline users according to a result returned from the presence server, and returns the user information about the online users to the client.
3. The search proxy connects the query results, that is, associates multiple query results. Normally, the association is performed according to the user URI. For example, the user information returned from the XDM server and the presence information obtained from the presence server are associated, and the user information and the presence information corresponding to the same user URI is integrated into one record. Certainly, the filtering operation can still be performed at the same time of the association.

The search proxy sends the integrated query result to the client through the aggregation proxy.

Three embodiments of the method for querying user information are provided, which are described as follows.

In one Embodiment, The client needs to query online users satisfying limiting conditions.

FIG. 4 is a schematic view of a networking of the presence server, the presence XDM server, the watcher client, the presence entity client. The presence server is based on the subscription/notification mechanism, and does not provide the query mechanism. In addition, the presence server is not an XCAP server. In other words, the presence server does not provide the interface for accessing the presence information through the XCAP protocol. The presence entity client issues the presence information to the presence server, the watcher client subscribes to the presence information of the presence entity, and the presence server receives and distributes the presence information to the watcher client. Moreover, in actual applications, the client on a user terminal such as a mobile phone or computer can function as the XDM client, the client of the presence entity, and the client of the watcher at the same time. If the search proxy requests to query and obtain the presence information directly from the presence server through a non-subscription/notification mechanism, new interface protocols and related processing are required between the search proxy and the presence server to accomplish, which makes the search proxy and the presence server more complicated.

To solve the above problems, for example, the presence server may function as the XCAP server, and the search proxy may access the presence information through the XCAP protocol because the search proxy can access the presence server like other XDM servers do, and it is unnecessary to import new functions. Currently, the presence server only functions as the XCAP client, and can access and perform operations on the XML documents on the presence XDM server.

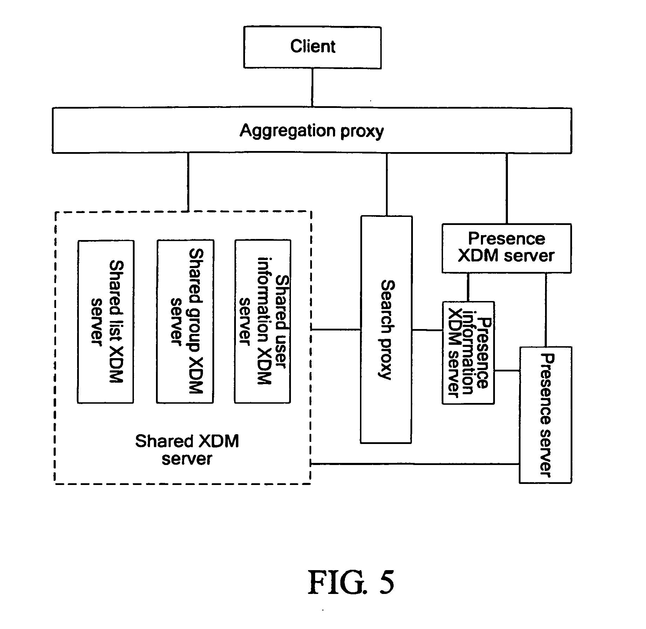

For another example, a presence information XDM server may be set, which synchronously stores the information such as the presence information and authorization rules of the users. In this case, when the information such as the presence information on the presence server or the authorization rules on the presence XDM server changes, the information on the presence information XDM server is updated at the same time, and the presence server can synchronize the information on the presence information XDM server through the XCAP or SIP protocol. FIG. 5 is a schematic view of a networking of the presence information XDM server, the presence server, and the presence XDM server.

Referring to FIG. 5, the system for querying user information includes a client, a presence server, XDM servers, and a server storing presence information and providing an XCAP service. The system further includes a search proxy.

The search proxy receives a query request containing query conditions sent from the client and forwarded by an aggregation proxy, and forwards a message of the query request to the XDM server and the presence information XDM server. The search proxy also receives query result returned from the server, and the query result includes the user information and the presence information satisfying the query conditions. The search proxy then integrates the user information with the presence information, and sends an integration result to the client through the aggregation proxy.

Specifically, the server storing presence information and providing XCAP service is a presence server, or a presence information XDM serve. The presence information XDM server synchronizes the user presence informations on the presence server.

The detailed query process of this embodiment is described as follows.

Block 1. The client sends an HTTP POST query request to the aggregation proxy. The query expression includes:
The user information conditions are "gender = female, city = Shenzhen, hobby = tennis", and the presence information condition is online. In addition, it is specified that the returned query result contains the user information such as a user URI and nicknames of users.

Block 2. The aggregation proxy forwards the request to the search proxy, and the search proxy queries the XML document information satisfying the user information conditions in the query expression on the shared user information XDM server. The following is an example of the content of an XML document containing user information:

```
       <?xml version="1.0" encoding="UTF-8"?>
        <user-profile entity="sunqian@msn.com">
            <nickname>Aaron</nickname>
            <gender>male</gender>
            <city>Shenzhen</city>
            <hobby>tennis</hobby>
            <e-mail>mailto:sunqian@huawei.com</e-mail>
       <user-profile>
```

Normally, the user information XML document of each user stored in the shared user information XDM server has a corresponding authorization rule document, which includes the rights of other users to access the user information in the document, such as the rights to read, query, write, and modify the information. The following is an example of an authorization rule document:

```
    <?xml version="1.0" encoding="UTF-8"?>
    <ruleset entity="sunqian@msn.com">
       <rule id=" 1">
             <conditions><identity>
    <domain domain="msn.com"/>
    </identity></conditions>
             <actions>search</actions>
             <transformations><provide-all-profile/></transformations>
        </rule>
    </ruleset>
```

A rule in the above authorization, that is, ruleset, for "sunqian@msn.com" specifies all users in domain "msn.com" is granted with the "search" right in the query scope of "provide-all-profile".

After the query message is received from the search proxy, the shared user information XDM server obtains the XML document list of user information which the user URI sending the query request has the right to read or query; the XDM server performs the query in the list according to the conditions "gender = female, city = Shenzhen, hobby = tennis"; then the XDM server returns the user information satisfying the conditions to the search proxy. The user information may include the user URI and nicknames. In addition, it may be unnecessary to return the information existing in the query conditions (for example, gender).

The method in the above paragraph requires the XDM server to process according to the query conditions. If the query conditions are relatively complex, the performance of the XDM server may be affected, which may cause degraded response rate to the operation of other XDM servers.

Here, another method can be adopted. First, the search proxy obtains the XML document list that the user URI that sends the query request has the right to read or query from the XDM server. The search proxy sends a separate query request to each XML document. Finally, the search proxy integrates all query result obtained from the XDM server. The method requires the XDM server to perform simple query for individual XML documents, i.e., the XDM server are only required to perform simple HTTP GET operations, and thereby brings little adverse effect on the performance of the XDM server.

Block 3. After obtaining the response message containing the user information, the search proxy sends the query request containing the user URI who sends the query request and the URI corresponding to the user information to t the presence information XDM server. The presence information XDM server obtains the authorization rule for the URI corresponding to the user information. The presence information XDM server determines whether the user URI that sends the query request has the right to obtain the presence information of STATUS about online or offline. The presence information XDM server queries the presence information for the authorized user and returns the presence information about online to the search proxy. The presence information on the presence information XDM server can be synchronized actively. For example, the presence server synchronizes the presence information to the XML documents through XCAP protocol. For another example, the presence information XDM server subscribes to the user presence informations on the presence server through the SIP protocol, and the presence server sends the updated presence information to the presence information XDM server through an SIP notification message when the subscribed presence information of the user changes, and then the presence information XDM server updates the presence information stored locally.

Alternatively, the presence information XDM server may obtain the presence information from the presence server at the time of querying. The search proxy sends the query request containing the user URI that needs to obtain the presence information to the presence information XDM server. The presence information XDM server, on behalf of the user who sends the query request, initiates a FETCH operation for these URIs to the presence server. The presence server authenticates the user who sends the query request in accordance with the authorization rules corresponding to the user URI in the query request, and returns a presence information NOTIFY message to the presence information XDM server. The presence information XDM server returns the presence information to the search proxy. The method conforms to the existing authentication mechanism and SIP subscription/notification mechanism for presence services, and does not need modification to the presence server.

Block 4. The search proxy integrates the user information with the presence information, and returns the integration result to the client.

The detailed integrating method may include following blocks. The query results from the XDM server are filtered according to the results of querying the presence information, that is, only the query result returned from the XDM server corresponding to the user URI whose presence information is online is forwarded to the client.

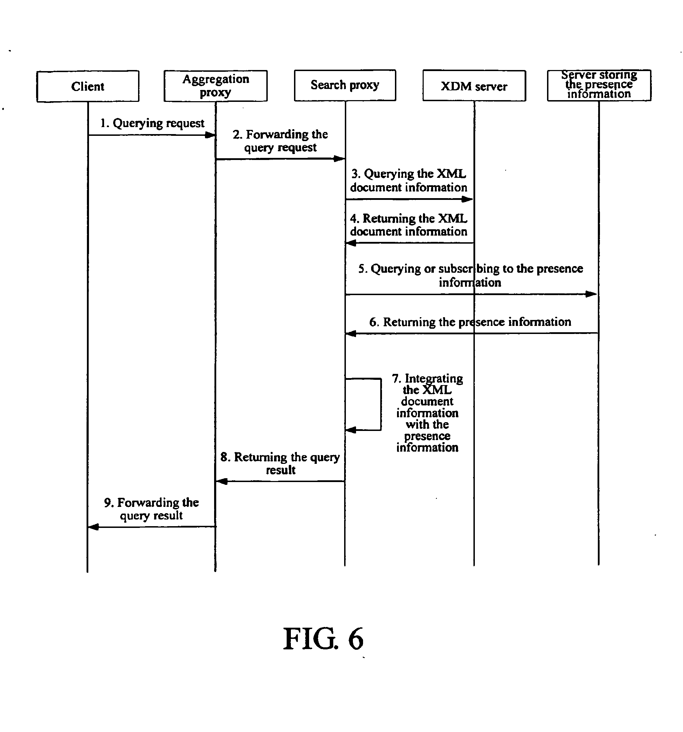

FIG. 6 is a flow chart of a message interaction process according to the above Embodiment.

In other embodiments, The presence information on the presence server is diversified. In addition to the basic status information such as online, the presence information may also include positions, emotions, and activities. Moreover, not all of the users want to or are allowed to provide the query of the presence information. According to the settings of some users or the system, the presence server can synchronize a part of the presence information of a part of the users to the shared user information XDM server or the presence information XDM server, but does not synchronize all of the presence information.

Actually, in other embodiments, the shared user information XDM server may directly synchronize the presence information on the presence server. it is easier to query the user information and the presence information at the same time, because the search proxy can obtain the user information and the corresponding presence information from the XDM server directly, and does not need to query the information on other servers. However, normally, the XDM server stores the simple static user information, and so the above practice may make the system more complicated.

Accordingly, a compromised solution is provided. According to this solution, an "online or not" field is added to the user information on the XDM server. The value of the field is synchronized according to the presence information of whether a user is online. When the online status of the user changes, the presence server can modify the information on the shared user information XDM server through the SIP or XCAP protocol, or the shared user information XDM server can subscribe to the presence information of whether a user is online. Thus, the volume of the information to be synchronized is small, and the search proxy does not need to access the presence server when querying the information about the online users.

Based on the above compromised solution, a system for querying user information is provided. The system includes a client, an aggregation proxy, an XDM server for storing user information, and a presence server, and further includes a search proxy.

The XDM server subscribes to user presence information from the presence server, synchronizes and updates the presence information according to a notification received from the presence server, determines a query result according to limiting conditions in a received query request, and returns the query result. Specifically, The XDM server is a shared XDM server, and the presence information, which the XDM server subscribes to, is whether a user is online.

The presence server sends the corresponding notification to the XDM server when the presence information that the XDM server subscribes to changes.

The search proxy receives the query request sent from the client and forwarded by the aggregation proxy, and forwards the query request message to the XDM server. The limiting conditions in the query request include the limiting conditions on the user presence informations. The search proxy then forwards the received the query result returned from the XDM server to the client through the aggregation proxy. Here, the limiting conditions on the presence information of the users are that the presence information shows that the users are online.

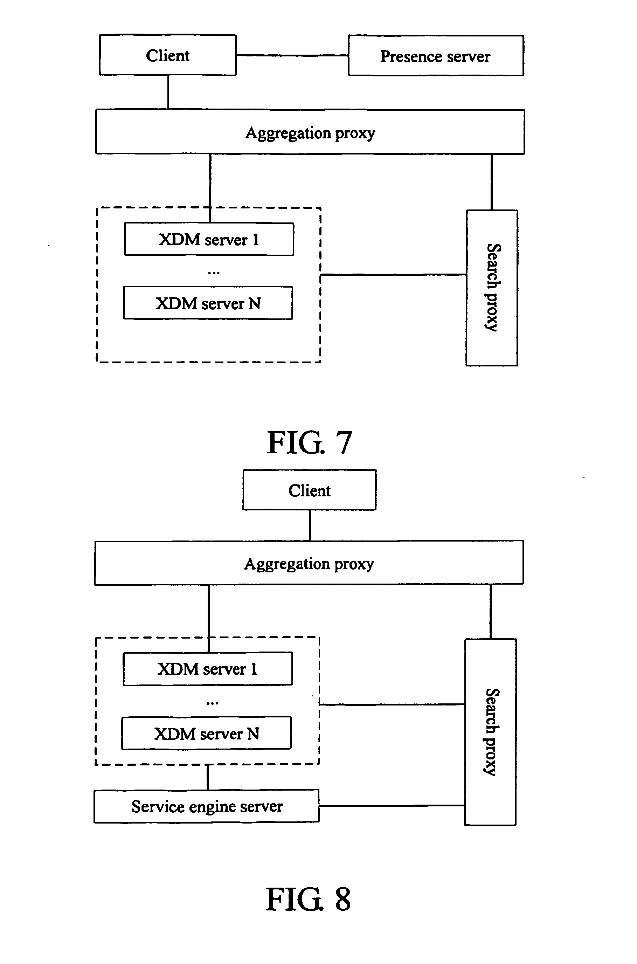

In some other embodiments, the client obtains the user information from the XDM server, and then obtains the corresponding presence information from the presence server. FIG. 7 is a schematic view of a networking of these embodiments. The network includes a client, a presence server, an aggregation proxy, a search proxy, and a group of XDM servers.

The XDM servers store the shared group information.for example, the shared group information may be expressed by the following XML document:

```
   <?xml version="1.0" encoding="UTF-8"?>
   <group>
 <list-service uri="sip:meetingroom-F1-7-A08@huawei.com">
   <display-name>regular meeting</display-name>
      <subject>Application and Software Dept<subject>
      <list>
          <entry uri="tel:13048907033"/>
          <entry uri="sip:sunqian@huawei.com">
              <display-name>Sun Qian</display-name>
           </entry>
       </list>
   <ruleset><rule id="1">
   <conditions><identity>
   <domain domain="huawei.com"/>
   </identity></conditions>
   <actions><search-handling>allow</search-handling></actions>
   <transformations/>
   </rule></ruleset>
   </list-service>
    </goup>
```

The shared group information in the above XML document includes a group URI, display-name, subject, member list, URI information about the group members, and authorization rule, that is, ruleset. A rule in the authorization rule is configured to permit the users in the domain="huawei.com" to query in the group. The rule specifying which URI is permitted to query in the group can be also defined in a separate authorization rule document corresponding to the XML document.

The client receives the query instruction containing the query conditions input by a user. For example, the specified query conditions are that the subject of the group contains the character string "Application and Software"; the returned group information includes the group URIs and names, and the presence information about the group members such as online or not needs to be returned. After receiving the query instruction, the client sends the query request to obtain the information on the XDM server. The aggregation proxy receives the query request, and forwards the query request to the search proxy. The search proxy obtains the information from the corresponding XDM server, for example, the shared group XDM server, and returns the information to the client through the aggregation proxy. According to the user URI in the returned information, the client sends a request for subscribing to the presence information from the presence server, and the presence server returns the presence information to the client. The client integrates the query result returned from search proxy with the presence information, and displays the integration result for the user. The detailed process and the integrating method for querying the XDM server by the search proxy are described in the embodiment illustrated in FIG. 5, and will not be described herein again.

In an embodiment, the client automatically divides one query of the user into two stages, that is, the search proxy queries and obtains the user information other than the presence information, and then subscribes to the presence information from the presence server. Finally, the search proxy integrates the user information with the presence information, and displays the integration result for users. Certainly, the query result returned from the search proxy can be displayed first, and the client then automatically subscribes to presence information of the user contained in the query result. Each time the client receives a notification containing the presence information returned from the presence server, the client refreshes the display content, and associates the presence information with other user information about the corresponding users, for example, displays the presence information and the user information in the same line.

Referring to FIG. 7, a system for querying user information is provided. The system includes a client, an XDM server, and a presence server. The system further includes a search proxy.

The client is adapted to receive a query instruction containing query conditions input by a user, and send a query request to the search proxy through the aggregation proxy to obtain corresponding information in the XDM server. After receiving the query result returned from search proxy, the client is adapted to subscribe to the user URI presence information from the presence server. The user URI is contained in the query result. The client then integrates the presence information returned from the presence server with the query result returned from the search proxy, and displays an integration result to the user.

The presence server is adapted to return the presence information that the client subscribes to back to the client.

The search proxy is adapted to forward the received query request to the corresponding XDM server, receive the query result returned from the XDM server, and forward the query result to the client through the aggregation proxy. The query result includes a found user URI.

If the limiting conditions for query are not strict enough, the search proxy may obtain too many query results from the XDM server. For example, if the user queries the user information specified the gender and city, thousands of records may be returned. So it may be inconvenient to return all of the query result to the user at one time. In addition, if the search proxy caches all of the query results, and returns the query results in batches (for example, 20 records a batch) according to the request of the client, the load on the search proxy is too heavy, and the user often needs the first few batches of the query result and ignores the rest results. At this time, the following solution can be adopted. When the client sends the query request, the batch number n is specified in the query request. Specifically, n = 1 when the query request is sent for the first time. When the search proxy queries on the XDM server, the search proxy determines to request to obtain the ((n - 1) x m + 1)th to the (n x m)th user information records according to the batch number and the preset number m of each batch. The m is the record number of a batch. The number of each batch can also be set in the query request. Normally, the user information records on the XDM server can be indexed according to a user URI. The XDM server returns the requested query result to the search proxy, and the search proxy forwards the query result to the client. When the client requests to obtain the next batch of query results, the specified batch number increases by one automatically, and the search proxy continues to request the (n x m + 1)th to the ((n+1) x m)th user information records from the XDM server. Then, the number of the query result is limited, and too many query results will not be returned at one time. Meanwhile, by specifying different batches, the query result returned to the client at different times will not be repeated.

In some other embodiments, the interaction between the service engine server and the search proxy is described. FIG. 8 is a schematic view of a networking of this embodiment. The network includes a client, an aggregation proxy, a search proxy, a service engine server, and a group of XDM servers.

In the embodiments, the server for the service engine, such as the presence, PoC, IM or position, can send the query request to the search proxy, and can obtain the user information satisfying certain conditions on the XDM server. In addition, the search proxy can obtain the service information about the users in a service engine from the service engine server. For example, the search proxy can obtain the presence information from the presence server, and obtain the position information from the position server. Then, the search proxy returns the service information to the client as a part of the query result.

Normally, the service engine server modifies, deletes, or reads the information about a separate document on the XDM server through the XCAP protocol. However, the service engine of the embodiment supports more complicated service requests. For example, in the position service, the position server receives a positioning request which specifies that the positions of online users in a specified group and of a specified gender need to be obtained. The position server sends a query request to the search proxy to query the URIs of the online users in the specified group and of the specified gender. After receiving the query request, the search proxy obtains the URIs of the group member users contained in the specified group from the XDM server storing the group information, and then obtains the user information about the group members from the XDM server in which the user information is stored. In this embodiment, the XDM server in which the user information is stored synchronizes the presence information about whether a user is online, and the XDM server in which the user information is stored returns the URIs of the online users satisfying the gender condition to the position server. Finally, the position server returns the position information about the users to the user who sends the request. Different from accessing the search proxy by the client, the service engine server may access the search proxy without the aggregation proxy.

It is known from the above description that the several different search proxys are provided. The details are described as follows.

In one embodiment, a search proxy is adapted to interact with the client, the XDM server, and the presence server, and includes a transceiver unit and an integrating unit.

The transceiver unit is adapted to receive a query request containing query conditions sent from the client, and forward the query request message to the XDM server storing user information or group information. The transceiver unit receives query result containing a user URI returned from the XDM server, and sends the query result to the integrating unit. The transceiver unit may also subscribe to the user URI presence information from the presence server, and send the received presence information returned from the presence server to the integrating unit. The user URI is contained in the query result. The transceiver unit then receives an integration result sent from the integrating unit, and sends the integration result to the client.

The integrating unit obtains the user URI satisfying the query conditions from the received query result sent from the XDM server, integrates the user URI with the received presence information, and sends the integration result to the transceiver unit.

In another embodiment, a search proxy is adapted to interact with the client and the XDM server. The search proxy includes a transceiver unit that is adapted to receive a query request containing limiting conditions on user presence information sent from the client, forward the query request message to the XDM server, receive the query result returned from the XDM server, and forward the query result to the client.

In another embodiment, a search proxy is adapted to interact with the client, the XDM server, and the server providing the XCAP service and storing the presence information. The search proxy includes a transceiver unit and an integrating unit.

The transceiver unit receives a query request containing query conditions sent from the client, and forwards the query request message to the XDM server and the server storing the presence information. The transceiver unit receives the query result returned from server, and returns the query result containing user information and the presence information to the integrating unit. The transceiver unit then receives an integration result sent from the integration unit, and sends the integration result to the client.

The integrating unit integrates the user information with the presence information satisfying the query conditions, and sends the integration result to the transceiver unit.

In some embodiments, a client includes an I/O unit and an integrating unit.

The I/O unit is adapted to receive a query instruction containing query conditions sent from a user, send a query request for obtaining information in the XDM server to a network side, and receive a query result containing a user URI returned from the network side. The I/O unit sends the query result to the integrating unit. The I/O unit also subscribes to the user URI presence information from the presence server, receives the presence information returned from the presence server, and sends the received presence information to the integrating unit. The user URI is contained in the query result. The I/O unit then receives an integration result sent from the integrating unit, and displays the integration result to the user.

The integrating unit is adapted to obtain the user URI satisfying the query conditions from the received query result sent from the XDM server, integrate the user URI with the received presence information, and send the integration result to the I/O unit.

In other embodiments, an XDM server is adapted to store user information, and interact with the search proxy and the presence server. The XDM server includes a presence information subscribing unit, a presence information synchronizing unit, and a query unit.

The presence information subscribing unit is adapted to subscribe to presence information from the presence server, receive a notification containing the changed presence information sent from the presence server, and send the changed presence information to the presence information synchronizing unit.

The presence information synchronizing unit is adapted to synchronize and update the changed presence information according to the received presence information.

The query unit is adapted to receive a query request containing limiting conditions sent from the search proxy, and the limiting conditions include limitations on the user presence information. The query unit queries the stored user information and the presence information synchronizing unit, obtains query result satisfying the query conditions, and returns the query result to the search proxy.

## Claims

1. A method for querying user information, wherein a search proxy is provided, and the method comprises:
receiving, by a search proxy, a query request containing query conditions and forwarding a message of the query request to an Extensible Markup Language Document Management XDM server;
**characterized by**
receiving, by the search proxy, a query result containing a user Uniform Resource Identifier (URI) satisfying the query conditions returned from the XDM server;
subscribing, by the search proxy, to presence information of a user from a presence server, wherein the user is indicated by the user URI contained in the query result;
receiving, by the search proxy, the presence information returned from the presence server; and
integrating, by the search proxy, the presence information returned from the presence server with the query result returned from the XDM server, and sending an integration result to a client.

2. The method according to claim 1, wherein when the query request is sent by a client, the process of receiving the query request comprises:
receiving the query request from an aggregation proxy;
wherein the process of sending a research result comprises:
sending the integration result through the aggregation proxy.

3. The method according to claim 1 or 2, wherein before the process of receiving the presence information, the method further comprises:
determining, by the presence server, whether the search proxy is allowed to obtain the presence information subscribed to according to an authorization rule document corresponding to each user URI, and returning the allowed presence information to the search proxy.

4. A method for querying user information, wherein a search proxy is provided, an XDM server in which the user information is stored subscribes to user presence information from a presence server, the presence server sends a corresponding notification to the XDM server when the presence information to which the XDM server subscribes changes, the XDM server synchronizes and updates the presence information according to the notification, and the method comprises:
receiving, by the search proxy, a query request, in which limiting conditions contain a limiting condition on the user presence information;
forwarding a message of the query request to an XDM server in which the user information is stored;
**characterized by**
receiving a query result from the XDM server, wherein the query result is determined by the XDM server according to the limiting condition in the query request; and
forwarding, by the search proxy, the query result to the client through an aggregation proxy.

5. The method according to claim 4, wherein the XDM server storing user information is a shared user information XDM server, the user presence information subscribed to from the presence server is whether a user is online, and the limiting condition is that the user presence information is online; the method further comprises:
the presence server sends a corresponding notification to the shared user information XDM server when the user gets online or offline.

6. A method for querying user information, **characterized in that** a search proxy, an XDM server, a presence information XDM server and a presence server are provided, and the method comprises:
receiving, by the search proxy, a query request containing query conditions and forwarding a message of the query request to the XDM server storing user information and the presence information XDM server storing user presence information which is synchronized from the presence server through XCAP or SIP;
receiving, by the search proxy, a query result returned from the XDM server wherein the query result includes a user information satisfying the query conditions, and a query result returned from the presence information XDM server wherein the query result includes a presence information satisfying the query conditions; and
integrating, by the search proxy, the user information with the presence information, and sending an integration result to the client.

7. A search proxy, **characterized in that** the search proxy adapted to interact with a client, an XDM server, and a presence server, and the search proxy comprising a transceiver unit and an integrating unit, wherein
the transceiver unit is adapted to receive a query request containing query conditions sent from the client, forward a message of the query request to the XDM server storing user information or group information; receive a query result containing a user URI returned from the XDM server, send the query result to the integrating unit; subscribe to the presence information of the user URI contained in the query result from the presence server, send the received presence information returned from the presence server to the integrating unit; receive an integration result sent from the integrating unit, and send the integration result to the client; and
the integrating unit is adapted to obtain the user URI satisfying the query conditions from the received query result sent from the XDM server, integrate the user URI with the received presence information, and send the integration result to the transceiver unit.

8. A search proxy, **characterized in that** the search proxy adapted to interact with a client, an XDM server, an presence information XDM server and a presence server, and the search proxy comprsing a transceiver unit and an integrating unit, wherein
the transceiver unit is adapted to receive a query request containing query conditions sent from the client, forward a message of the query request to the XDM server storing user information and the presence information XDM server storing user presence information which is synchronized from a presence server, through XCAP or SIP receive a query result returned from the XDM server, wherein the query result includes a user information satisfying the query conditions, and a query result returned from the presence information XDM server wherein the query result includes a presence information satisfying the query conditions, return the query result containing user information and the presence information to the integrating unit; receive an integration result sent from the integration unit, and send the integration result to the client; and
the integrating unit is adapted to integrate the user information with the presence information satisfying the query conditions, and send the integration result to the transceiver unit.

## Patentansprüche

1. Verfahren zum Abfragen von Benutzerinformationen, wobei ein Suchproxy vorgesehen ist und das Verfahren die folgenden Schritte aufweist:
Empfangen durch einen Suchproxy einer Abfrageanforderung, die Abfragebedingungen enthält, und Weiterleiten einer Nachricht der Abfrageanforderung an einen "Extensible Markup Language Document Management"-XDM-Server;
**gekennzeichnet durch**
Empfangen **durch** den Suchproxy eines Abfrageresultats, das einen Benutzer-"Uniform Resource Identifier"-(URI) enthält, der die Abfragebedingungen erfüllt, die vom XDM-Server zurückgeschickt werden;
Abonnieren **durch** den Suchproxy von Anwesenheitsinformationen eines Benutzers von einem Anwesenheitsserver, wobei der Benutzer **durch** den Benutzer-URI angegeben wird, der im Abfrageresultat enthalten ist;
Empfangen **durch** den Suchproxy der vom Anwesenheitsserver zurückgeschickten Anwesenheitsinformationen und
Integrieren **durch** den Suchproxy der vom Anwesenheitsserver zurückgeschickten Anwesenheitsinformationen mit dem vom XDM-Server zurückgeschickten Abfrageresultat und Senden eines Integrationsresultats an einen Client.

2. Verfahren nach Anspruch 1, wobei dann, wenn die Abfrageanforderung durch einen Client gesendet wird, der Prozess des Empfangens der Abfrageanforderung aufweist:
Empfangen der Abfrageanforderung von einem Bündelungsproxy;
wobei der Prozess des Sendens eines Untersuchungsresultats aufweist:
Senden des Integrationsresultats durch den Bündelungsproxy.

3. Verfahren nach Anspruch 1 oder 2, wobei vor dem Prozess des Empfangens der Anwesenheitsinformationen das Verfahren ferner aufweist:
Bestimmen durch den Anwesenheitsserver, ob es dem Suchproxy gemäß einem jedem Benutzer-URI entsprechenden Berechtigungsregeldokument erlaubt ist, die abonnierten Anwesenheitsinformationen zu erhalten, und Zurückschicken der erlaubten Anwesenheitsinformationen an den Suchproxy.

4. Verfahren zum Abfragen von Benutzerinformationen, wobei ein Suchproxy vorgesehen ist, ein XDM-Server, in dem die Benutzerinformationen gespeichert sind, Benutzeranwesenheitsinformationen von einem Anwesenheitsserver abonniert, der Anwesenheitsserver eine entsprechende Mitteilung an den XDM-Server sendet, wenn sich die Anwesenheitsinformationen ändern, die der XDM-Server abonniert, der XDM-Server die Anwesenheitsinformationen gemäß der Mitteilung synchronisiert und aktualisiert, und das Verfahren die folgenden Schritte aufweist:
Empfangen durch den Suchproxy einer Abfrageanforderung, in der Grenzbedingungen eine Grenzbedingung für die Benutzeranwesenheitsinformationen enthalten;
Weiterleiten einer Nachricht der Abfrageanforderung an einen XDM-Server, in dem die Benutzerinformationen gespeichert sind;
**gekennzeichnet durch**
Empfangen eines Abfrageresultats vom XDM-Server, wobei das Abfrageresultat durch den XDM-Server gemäß der Grenzbedingung in der Abfrageanforderung bestimmt wird; und
Weiterleiten **durch** den Suchproxy des Abfrageresultats an den Client **durch** einen Bündelungsproxy.

5. Verfahren nach Anspruch 4, wobei der XDM-Server, der Benutzerinformationen speichert, ein gemeinsam genutzter Benutzerinformations-XDM-Server ist, die vom Anwesenheitsserver abonnierten Benutzeranwesenheitsinformationen betreffen, ob ein Benutzer online ist, und die Grenzbedingung ist, dass die Benutzeranwesenheitsinformationen online sind; wobei das Verfahren ferner aufweist:
dass der Anwesenheitsserver eine entsprechende Mitteilung an den gemeinsam genutzten Benutzerinformations-XDM-Server sendet, wenn der Benutzer online oder offline geht.

6. Verfahren zum Abfragen von Benutzerinformationen, **dadurch gekennzeichnet, dass** ein Suchproxy, ein XDM-Server, ein Anwesenheitsinformations-XDM-Server und ein Anwesenheitsserver vorgesehen sind, und das Verfahren aufweist:
Empfangen durch den Suchproxy einer Abfrageanforderung, die Abfragebedingungen enthält, und Weiterleiten einer Nachricht der Abfrageanforderung an den XDM-Server, der Benutzerinformationen speichert, und den Anwesenheitsinformations-XDM-Server, der Benutzeranwesenheitsinformationen speichert, die vom Anwesenheitsserver durch XCAP oder SIP synchronisiert werden;
Empfangen durch den Suchproxy eines vom XDM-Server zurückgeschickten Abfrageresultats, wobei das Abfrageresultat Benutzerinformationen aufweist, die die Abfragebedingungen erfüllen, und eines vom Anwesenheitsinformations-XDM-Server zurückgeschickten Abfrageresultats, wobei das Abfrageresultat Anwesenheitsinformationen aufweist, die die Abfragebedingungen erfüllen; und
Integrieren durch den Suchproxy der Benutzerinformationen mit den Anwesenheitsinformationen und Senden eines Integrationsresultats an den Client.

7. Suchproxy, **dadurch gekennzeichnet, dass** der Suchproxy eingerichtet ist, mit einem Client, einem XDM-Server und einem Anwesenheitsserver zusammenzuwirken, und der Suchproxy eine Transceivereinheit und eine Integrationseinheit aufweist, wobei die Transceivereinheit eingerichtet ist, eine Abfrageanforderung zu empfangen, die vom Client gesendete Abfragebedingungen enthält, eine Nachricht der Abfrageanforderung an den XDM-Server weiterzuleiten, der Benutzerinformationen oder Gruppeninformationen speichert; ein Abfrageresultat zu empfangen, das einen Benutzer-URI enthält, der vom XDM-Server zurückgeschickt wird, das Abfrageresultat an die Integrationseinheit zu senden; die Anwesenheitsinformationen der Benutzer-URI, die im Abfrageresultat enthalten sind, vom Anwesenheitsserver zu abonnieren, die empfangenen, vom Anwesenheitsserver zurückgeschickten Anwesenheitsinformationen an die Integrationseinheit zu senden; ein Integrationsresultat zu empfangen, das von der Integrationseinheit gesendet wird, und das Integrationsresultat an den Client zu senden; und
die Integrationseinheit eingerichtet ist, den Benutzer-URI, der die Abfragebedingungen erfüllt, aus dem empfangenen Abfrageresultat zu erhalten, das vom XDM-Server gesendet wird, den Benutzer-URI mit den empfangenen Anwesenheitsinformationen zu integrieren und das Integrationsresultat an die Transceivereinheit zu senden.

8. Suchproxy, **dadurch gekennzeichnet, dass** der Suchproxy eingerichtet ist, mit einem Client, einem XDM-Server, einem Anwesenheitsinformations-XDM-Server und einem Anwesenheitsserver zusammenzuwirken, und der Suchproxy eine Transceivereinheit und eine Integrationseinheit aufweist, wobei
die Transceivereinheit eingerichtet ist, eine Abfrageanforderung zu empfangen, die vom Client gesendete Abfragebedingungen enthält, eine Nachricht der Abfrageanforderung an den XDM-Server, der Benutzerinformationen speichert, und den Anwesenheitsinformations-XDM-Server weiterzuleiten, der Benutzeranwesenheitsinformationen speichert, die vom Anwesenheitsserver durch XCAP oder SIP synchronisiert werden, ein vom XDM-Server zurückgeschicktes Abfrageresultat, wobei das Abfrageresultat Benutzerinformationen aufweist, die die Abfragebedingungen erfüllen, und ein vom Anwesenheitsinformations-XDM-Server zurückgeschicktes Abfrageresultat zu empfangen, wobei das Abfrageresultat Anwesenheitsinformationen aufweist, die die Abfragebedingungen erfüllen, das Abfrageresultat, das Benutzerinformationen und die Anwesenheitsinformationen enthält, an die Integrationseinheit zurückzuschicken; ein von der Integrationseinheit gesendetes Integrationsresultat zu empfangen und das Integrationsresultat an den Client zu senden; und
die Integrationseinheit eingerichtet ist, die Benutzerinformationen mit den Anwesenheitsinformationen zu integrieren, die die Abfragebedingungen erfüllen, und das Integrationsresultat an die Transceivereinheit zu senden.

## Revendications

1. Procédé de demande d'informations d'utilisateurs, dans lequel il est prévu un mandataire de recherche, le procédé comprenant :
la réception, par un mandataire de recherche, d'une demande de requête contenant des conditions de requête et réacheminant un message de la demande de requête à un serveur de Gestion de Document en Langage de Balisage Extensible, XDM (Extensible Markup Language Document Management) ;
**caractérisé par**
la réception, par le mandataire de recherche, d'un résultat de requête contenant un Identifiant Uniforme de Ressource (URI, Uniform Resource Identifier) satisfaisant aux conditions de requête renvoyées par le serveur XDM ;
l'abonnement, par le mantataire de recherche, à des informations de présence d'un utilisateur auprès d'un serveur de présence, dans lequel l'utilisateur est indiqué par l'URI d'utilisateur contenu dans le résultat de requête ;
la réception, par le mandataire de recherche, des informations de présence renvoyées par le serveur de présence ; et
l'intégration, par le mandataire de recherche, des informations de présence renvoyées par le serveur de présence au résultat de requête renvoyé par le serveur XDM, et l'envoi à un client d'un résultat d'intégration.

2. Procédé selon la revendication 1, dans lequel, lorsque la demande de requête est envoyée par un client, le processus de réception de la demande de requête comprend :
la réception de la demande de requête en provenance d'un mandataire d'agrégation ;
dans lequel le processus d'envoi d'un résultat de recherche comprend :
l'envoi du résultat d'intégration par l'intermédiaire du mandataire d'agrégation.

3. Procédé selon la revendication 1 ou 2, dans lequel, avant le processus de réception des informations de présence, le procédé comprend en outre :
la détermination, par le serveur de présence, du fait de savoir si le mandataire de recherche a l'autorisation d'obtenir les informations de présence auxquelles il est abonné conformément à un document de règle d'autorisation correspondant à chaque URI d'utilisateur, et le renvoi des informations de présence autorisées au mandataire de recherche.

4. Procédé de demande d'informations d'utilisateurs, dans lequel il est prévu un mandataire de recherche, un serveur XDM dans lequel sont stockées les informations d'utilisateurs s'abonne à des informations de présence d'utilisateurs auprès d'un serveur de présence, le serveur de présence envoie une notification correspondante au serveur XDM lorsque les informations de présence auxquelles s'abonne le serveur XDM changent, le serveur XDM synchronise et met à jour les informations de présence conformément à la notification, et le procédé comprend :
la réception, par le mandataire de recherche, d'une demande de requête, dans laquelle des conditions de limitation contiennent une condition de limitation imposée aux informations de présence d'utilisateurs ;
le réacheminement d'un message de la demande de requête à un serveur XDM dans lequel sont stockées les informations d'utilisateurs ;
**caractérisé par**
la réception d'un résultat de requête en provenance du serveur XDM, le résultat de requête étant déterminé par le serveur XDM conformément à la condition de limitation contenue dans la demande de requête ; et
le réacheminement, par le mandataire de recherche, du résultat de requête au client par l'intermédiaire d'un mandataire d'agrégation.

5. Procédé selon la revendication 4, dans lequel le serveur XDM stockant des informations d'utilisateurs est un serveur XDM d'informations d'utilisateurs partagé, les informations de présence d'utilisateurs auxquelles un abonnement est effectué auprès du serveur de présence indiquent si un utilisateur est en ligne, et la condition de limitation est que les informations de présence d'utilisateurs sont en ligne ; le procédé comprenant en outre :
l'envoi, par le serveur de présence, d'une notification correspondante au serveur XDM d'informations d'utilisateurs partagé lorsque l'utilisateur passe à l'état en ligne ou hors ligne.

6. Procédé de demande d'informations d'utilisateurs, **caractérisé en ce qu'**il est prévu un mandataire de recherche, un serveur XDM, un serveur XDM d'informations de présence et un serveur de présence, le procédé comprenant :
la réception, par le mandataire de recherche, d'une demande de requête contenant des conditions de requête et le réacheminement d'un message de la demande de requête au serveur XDM stockant des informations d'utilisateurs et au serveur XDM d'informations de présence stockant des informations de présence d'utilisateurs, qui est synchronisé par rapport au serveur de présence par XCAP ou SIP ;
la réception, par le mandataire de recherche, d'un résultat de recherche renvoyé par le serveur XDM, le résultat de recherche comprenant une information d'utilisateur satisfaisant aux conditions de requête et un résultat de requête renvoyé par le serveur XDM d'informations de présence, le résultat de requête comprenant une information de présence satisfaisant aux conditions de requête ; et
l'intégration, par le mandataire de recherche, des informations d'utilisateurs aux informations de présence, et l'envoi d'un résultat d'intégration au client.

7. Mandataire de recherche, **caractérisé en ce que** le mandataire de recherche est apte à interagir avec un client, un serveur XDM et un serveur de présence, et **en ce que** le mandataire de recherche comprend une unité d'émission-réception et une unité d'intégration, dans lequel
l'unité d'émission-réception est apte à recevoir une demande de requête contenant des conditions de requête envoyées par le client, réacheminer un message de la demande de requête au serveur XDM stockant des informations d'utilisateurs ou des informations de groupes ; recevoir un résultat de requête contenant un URI d'utilisateur, renvoyé par le serveur XDM, envoyer le résultat de requête à l'unité d'intégration ; s'abonner aux informations de présence de l'URI d'utilisateur contenu dans le résultat de requête auprès du serveur de présence, envoyer les informations de présence reçues renvoyées par le serveur de présence à l'unité d'intégration ; recevoir un résultat d'intégration envoyé par l'unité d'intégration, et envoyer le résultat d' intégration au client ; et
l'unité d'intégration est apte à obtenir l'URI d'utilisateur satisfaisant aux conditions de requête à partir du résultat de requête reçu envoyé par le serveur XDM, intégrer l'URI d'utilisateur aux informations de présence reçues, et envoyer le résultat d'intégration à l'unité d'émission-réception.

8. Mandataire de recherche, **caractérisé en ce que** le mandataire de recherche est apte à interagir avec un client, un serveur XDM, un serveur XDM d'informations de présence, et un serveur de présence, le mandataire de recherche comprenant une unité d'émission-réception et une unité d'intégration, dans lequel
l'unité d'émission-réception est apte à recevoir une demande de requête contenant des conditions de requête envoyées par le client, réacheminer un message de la demande de requête au serveur XDM stockant des informations d'utilisateurs et au serveur XDM d'informations de présence stockant des informations de présence d'utilisateurs, qui est synchronisé par rapport à un serveur de présence par XCAP ou SIP, recevoir un résultat de requête renvoyé par le serveur XDM, le résultat de requête comprenant une information d'utilisateur satisfaisant aux conditions de requête, et un résultat de requête renvoyé par le serveur XDM d'informations de présence, le résultat de requête comprenant une information de présence satisfaisant aux conditions de requête, renvoyer le résultat de requête contenant des informations d'utilisateurs et les informations de présence à l'unité d'intégration ; recevoir un résultat d'intégration envoyé par l'unité d'intégration et envoyer le résultat d'intégration au client ; et
l'unité d'intégration est apte à intégrer les informations d'utilisateurs aux informations de présence satisfaisant aux conditions de requête, et envoyer le résultat d'intégration à l'unité d'émission-réception.
